# EUROPEAN PATENT APPLICATION

(11) **EP 4 633 174 A1**
(43) Date of publication of application: **15.10.2025**
(21) Application number: 24315153.7
(22) Date of filing: 11.04.2024
(51) Int. Cl.: H04N 21/235, H04N 21/278, H04N 21/81, H04N 21/84, H04N 21/854

(54) **AVATAR METADATA FORMAT**

(71) Applicant: InterDigital CE Patent Holdings, SAS, 75017 Paris (FR)
(72) Inventor: Galvane, Quentin, 35235 THORIGNE-FOUILLARD (FR); Gosselin, Philippe Henri, 35235 THORIGNE-FOUILLARD (FR); Cova Regateiro, João Pedro, 35220 CHATEAUBOURG (FR)
(74) Representative: Vossius & Partner Patentanwälte Rechtsanwälte mbB

(57) **Abstract**

Some embodiments of a method may include: requesting, from a server, a list of avatar formats available corresponding to an avatar; receiving, from the server, at least one avatar metadata file corresponding to the avatar; selecting a first format of the avatar; requesting, from the server, avatar representation data corresponding to the first format of the avatar; receiving, from the server, the avatar representation data corresponding to the first format of the avatar; and rendering, in a virtual environment, the avatar representation data corresponding to the first format of the avatar.

## Description

### INCORPORATION BY REFERENCE

The present application incorporates by reference in their entirety the following applications: U.S. Provisional Patent Application Serial No. EP24305094, entitled "Avatar Json Interchange File Format" and filed January 15, 2024 (‴094 application").

### BACKGROUND

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

### SUMMARY

An example method in accordance with some embodiments may include: requesting, from a server, a list of avatar formats available corresponding to an avatar; receiving, from the server, at least one avatar metadata file corresponding to the avatar; selecting a first format of the avatar; requesting, from the server, avatar representation data corresponding to the first format of the avatar; receiving, from the server, the avatar representation data corresponding to the first format of the avatar; and rendering, in a virtual environment, the avatar representation data corresponding to the first format of the avatar.

For some embodiments of the example method, the first format is one of the group of formats consisting of PLY, OBJ, FBX, USD, GLTF, and DNA.

For some embodiments of the example method, at least one of the at least one avatar metadata file is in avatar metadata format (.avm).

Some embodiments of the example method may further include: selecting a second format of the avatar; requesting, from the server, avatar representation data corresponding to the second format of the avatar; receiving, from the server, the avatar representation data corresponding to the second format of the avatar; and rendering, in a virtual environment, the avatar representation data corresponding to the second format of the avatar.

For some embodiments of the example method, the avatar representation data was generated by the server.

For some embodiments of the example method, the avatar representation data originated from more than one data format.

For some embodiments of the example method, the avatar representation data includes geometry data corresponding to the avatar.

For some embodiments of the example method, the avatar representation data includes avatar profile data corresponding to the avatar.

For some embodiments of the example method, the avatar representation data includes path information indicating a location of avatar data.

For some embodiments of the example method, the avatar representation data includes mesh data corresponding to the avatar.

For some embodiments of the example method, the avatar representation data includes two or more levels of detail of geometry data corresponding to the avatar.

Some embodiments of the example method may further include: requesting, from the server, avatar representation data corresponding to a new level of detail of the avatar; receiving, from the server, the avatar representation data corresponding to the new level of detail of the avatar; and rendering, in a virtual environment, the avatar representation data corresponding to the new level of detail of the avatar.

For some embodiments of the example method, selecting the first format of the avatar is based on at least one of the at least one avatar metadata file corresponding to the avatar.

For some embodiments of the example method, the avatar representation data supports a JSON file format.

An example apparatus in accordance with some embodiments may include: a processor; and a memory storing instructions operative, when executed by the processor, to cause the apparatus to perform the method of any one of the methods listed above.

### BRIEF DESCRIPTION OF THE DRAWINGS

FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a process diagram illustrating an example processing of avatar data according to some embodiments.
FIG. 3 is a process diagram illustrating an example processing of avatar data using avatar metadata information as an input and an output of the codec according to some embodiments.
FIG. 4 is a message sequencing diagram illustrating example client-server interactions for requesting avatar data using the .avm file format according to some embodiments.
FIG. 5 is a message sequencing diagram illustrating example client-server interactions for delivery of avatar data with two representations at two distinct clients according to some embodiments.
FIG. 6 is a flowchart illustrating an example process for requesting avatar data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

### DETAILED DESCRIPTION

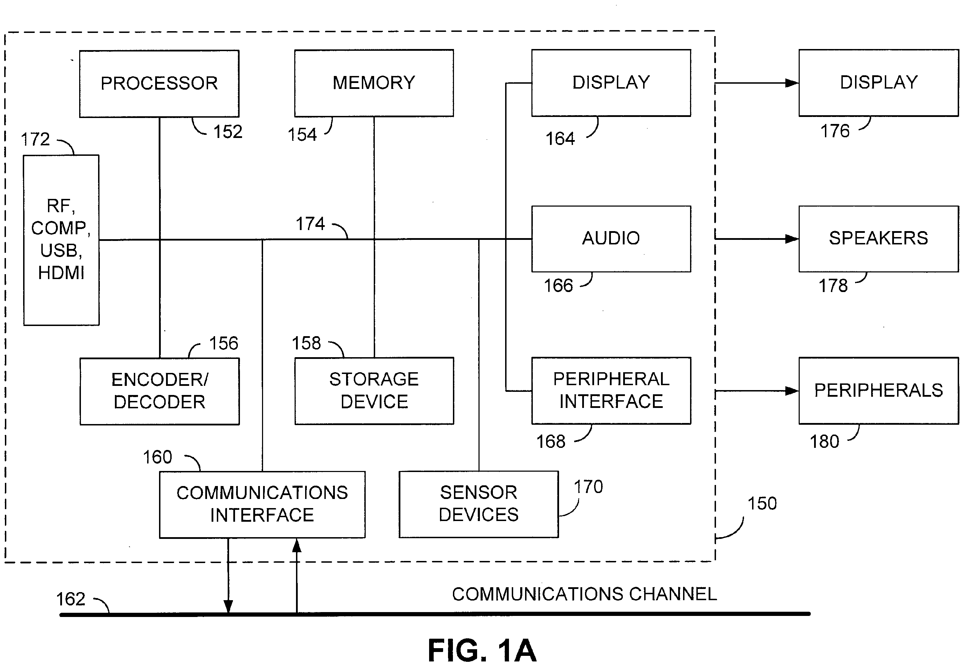

FIG. 1A is a system diagram illustrating an example set of interfaces for a system according to some embodiments. An extended reality display device, together with its control electronics, may be implemented using a system such as the system of FIG. 1A. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. in accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia interface (HDMI) input terminal. Other examples, not shown in FIG. 1A, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion ' and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

in various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

### Scene Description Framework for XR

The present principles generally relate to the domain of rendering of extended reality scene description and extended reality rendering. The present document is also understood in the context of the formatting and the playing of extended reality applications when rendered on end-user devices such as mobile devices or Head-Mounted Displays (HMD).

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media - Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

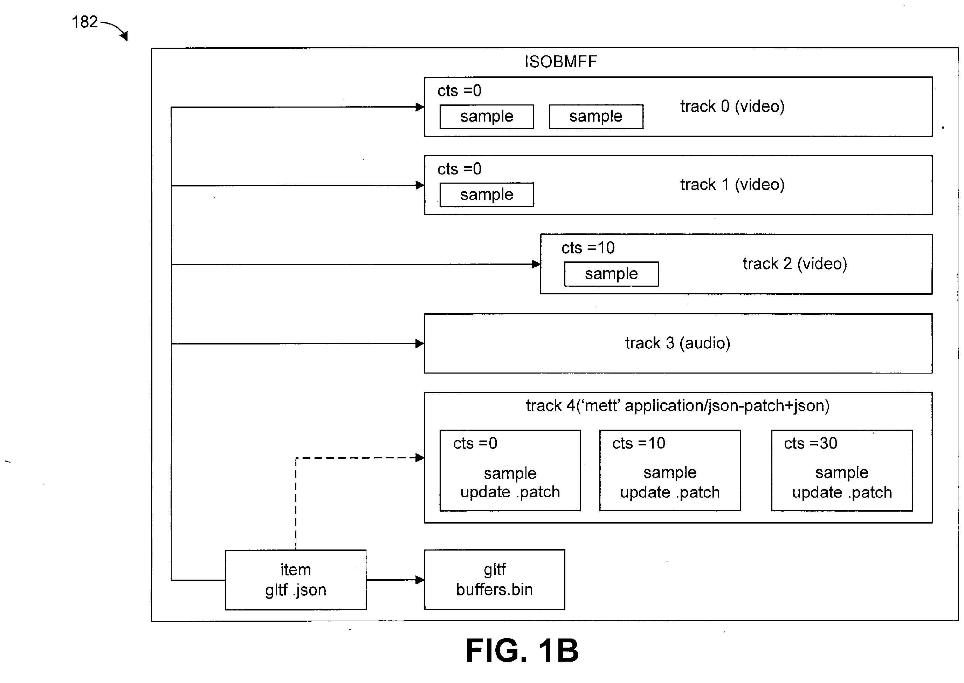

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

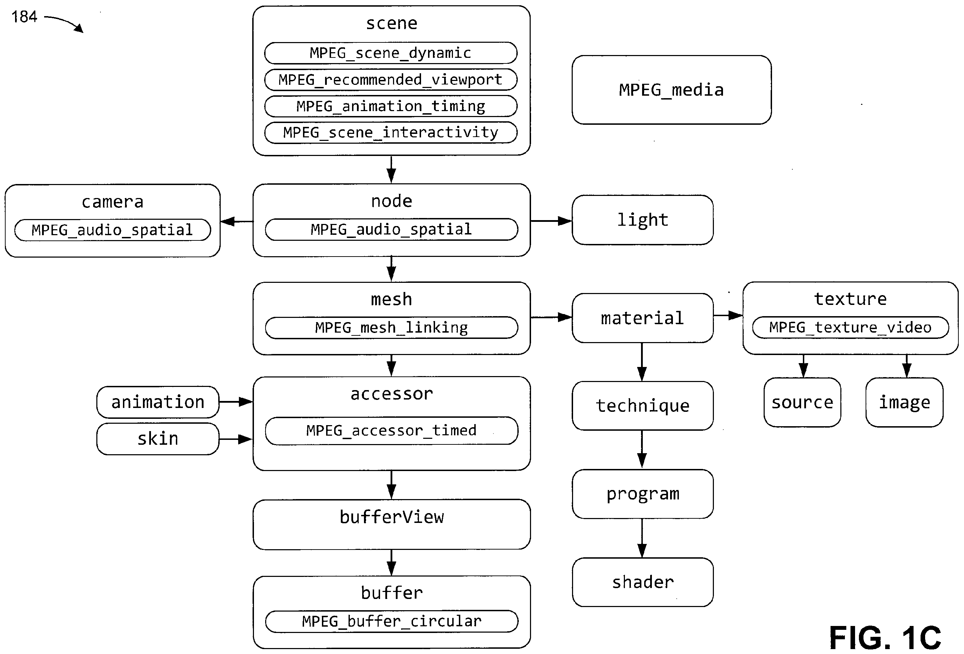

FIG. 1C is a system diagram illustrating an example set of interfaces for an MPEG-I node hierarchy 184 supporting elements of scene interactivity according to some embodiments.

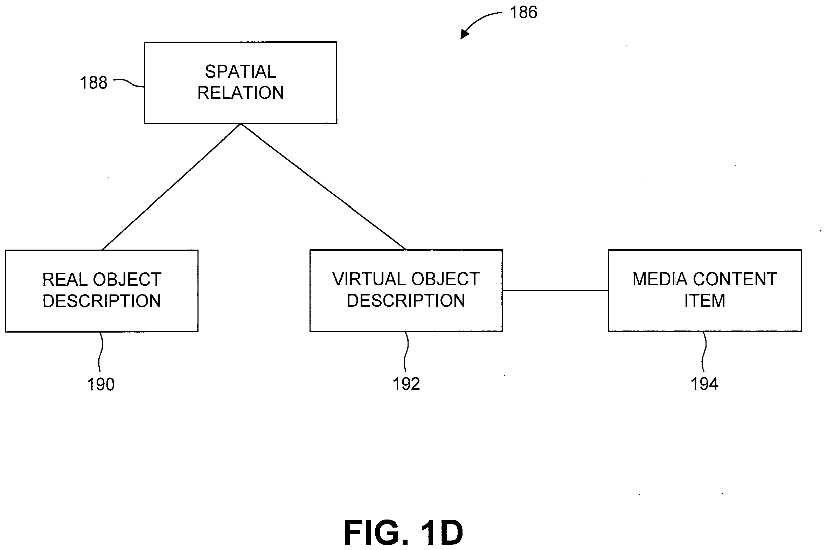

FIG. 1D is a schematic plan view illustrating example relationships of extended reality scene description objects according to some embodiments. In this example, the scene graph 186 includes a description of a real object 190, for example 'plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the gITF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 (*"MPEG Extension"*)*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

There are currently many formats for encoding generic 3D content including mesh rigs, e.g., deformable 3D objects using weights. One may find formats like FBX, USD, or gITF, for instance. No open formats are understood to be dedicated to avatar data. In most cases, the application is tasked with interpreting the data that may relate to an avatar, in either of the currently existing formats, and how to parse and utilize the data.

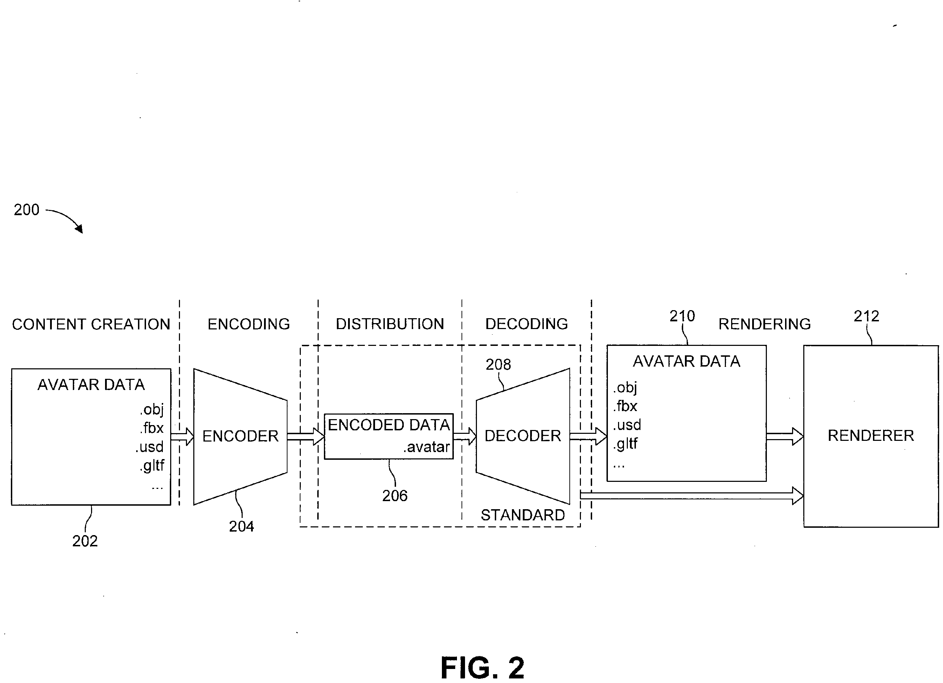

FIG. 2 is a process diagram illustrating an example processing of avatar data according to some embodiments. With the considerable increase in activity related to XR/VR and the metaverse in general, a standardization effort on the avatar subject is starting in MPEG. The intent is to facilitate distribution and ensure interoperability between the different devices, tools, and platforms. This process may typically result in the definition of a new standardized format dedicated to avatars.

As illustrated in the process 200 of FIG. 2, such a format may be used for encoding avatar data 202 from various sources, including existing 3D formats (e.g., .obj, .fbx, .usd, .gltf). An encoder 204 may generate encoded data 206 in this dedicated format. The encoded data 206 may be sent to a decoder 208 to be decoded into another format of avatar data 210 or directly rendered by a renderer 212 after decoding. For some embodiments, a standardization process, for example, focuses on the encoded format and the decoding process.

The '094 application details data that may be attached to a computer graphics (CG) avatar and describes Avatar JSON Interchange File (AJIF) data. As understood, AJIF is the first format to encode all of the avatar data listed below in a JSON-based format dedicated specifically to an avatar. Data that may be used to define an avatar, for some embodiments, is described below.

High level avatar information may include the following fields: Name, Description, Identifier, Age, and Gender.

For a list with different levels of detail concerning the same avatar, each level may include the following fields: geometry, body parts, mappings, skeletons, and one or more controllers.

A geometry may include the following items: vertices, faces, normals, blendshapes, and textures. The normals field may include a list of 3D vectors associated to the vertices or faces of the geometry.

A skeleton may include a list of joints and a list of skinning weights. Each joint may include body location / semantics of the joint, children joints, and a transform (scale, rotation, and translation).

Controllers may include a mapping, an input, and animation parameters. A mapping may be a string with a corresponding code syntax. An input may be a list of increasing weights.

As detailed in Table 1, currently, most of the existing formats, as understood, do not support all the features typically expected for avatar encoding and exchanging in an open fashion. Some formats, such as PLY, allow only representing the geometry of an avatar, while other formats, such as gITF, have e.g., preferable features for an avatar representation, including the geometry, skeleton, and animation data, among other components. Most of these formats, however, do not contain detailed metadata information on the avatar (e.g., name, age, and gender, among other fields). Additionally, the most advanced 3D formats may be used to define an avatar within a scene graph, for instance, with potentially multiple representations. These formats may still lack essential features to describe an avatar and to indicate where the associated data is located within the file. Furthermore, the same avatar may be defined with multiple representations through different files. For instance, different 3D authoring tools may export a mesh in different file formats with different topologies, different levels of detail (LoD), or different skinning weights. For some embodiments, there may be different representations of the same avatar with different properties, different parameters, and/or other functional differences.

In a distribution context (for exchanging, storing, or streaming data), these limitations are problematic, and they make the encoding of avatar data from any of these input formats difficult. Using these formats as an input, the encoder does not get any high-level metadata information (such as a name, a contextual description, or an age of the avatar). Moreover, if the encoder is not able to identify what data is contained in the file and where the avatar data is located, the encoding process is bound to fail. To encode multiple representations of the same avatar from one or several sources, the encoder lacks information on the input files, such as detailing the type of content contained in the source file.

On the other side of the avatar processing pipeline, some applications may support only a limited number of file formats. The decoder may export the decoded avatar in one of the file formats shown in Table 1 and provide the avatar metadata to the application.

The lack of avatar specific metadata may be problematic for some use cases. In the context of the metaverse, for instance, multiple applications may want to display the avatar of a user. These applications may use a different input file format and may use (or require) some form of metadata information on the avatar. Therefore, some embodiments may define and store this metadata on a server. For instance, for some embodiments, if a server stores different representations of an avatar using different file formats, the client may access this metadata information to request the relevant data, as well as for different clients who may have different requirements. As understood, there are currently no known formats detailing the metadata of an avatar in association with one or more data sources.

Table 1 details the capabilities of different formats regarding avatar representation. Table 1 lists 3D formats and the supported features.

**Table 1.**

| **Format** | **Geometry Vertices & Faces** | **Rig / Skeleton** | **Animation** | **LOD** | **Textures** | **Multiple File Storage** | **Proprietary** | **Avatar Metadata** |
|---|---|---|---|---|---|---|---|---|
| PLY | Yes | No | No | No | No | No | No | No |
| OBJ | Yes | No | No | No | Yes | Yes | No | No |
| FBX | Yes | Yes | Yes | Yes | Yes | No | Yes | No |
| USD | Yes | Yes | Yes | Yes | Yes | No | Yes | No |
| GLTF | Yes | Yes | Yes | Yes | Yes | Yes | No | No |
| DNA | Yes | Yes | Yes | Yes | Yes | No | Yes | Yes |

To overcome these limitations as understood, this application presents a dedicated avatar metadata format (.avm) that describes all the data associated with an avatar. The format may reference multiple sources, in which each may contain one or multiple representations. For each of the referenced avatar representations, the format indicates the information to access the data and lists the properties defined in the source file. Some embodiments allow grouping of multiple avatar representations using potentially different formats.

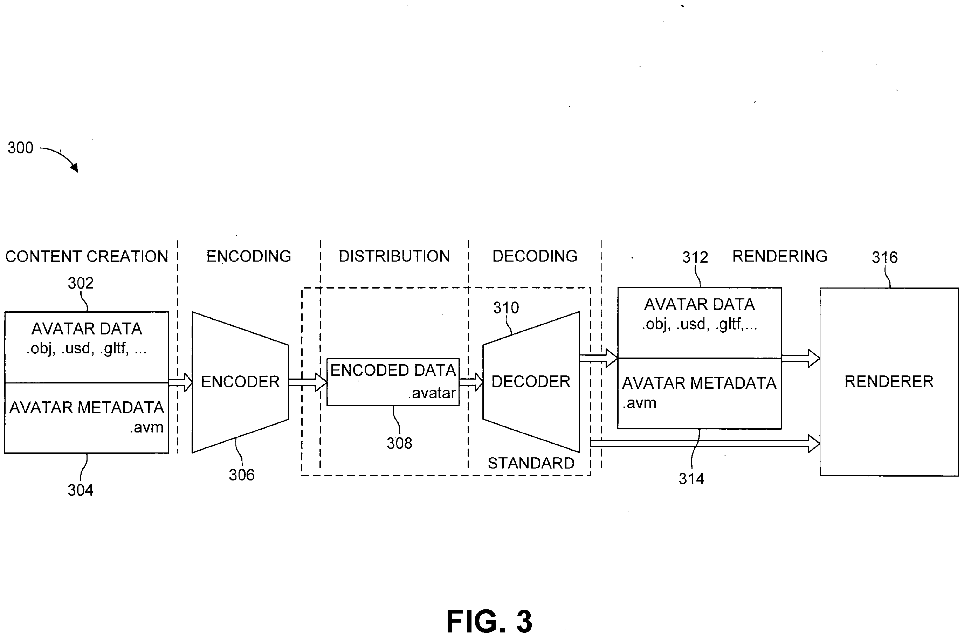

FIG. 3 is a process diagram illustrating an example processing of avatar data using avatar metadata information as an input and an output of the codec according to some embodiments. As shown in the process 300 of FIG. 3, which is in a standardization context, avatar metadata 304, 314 in such a format may be used both as an input and an output of the codec.

The format may be used as an input format of the encoder 306. The format indicates what features are to be encoded, and the format allows the encoder to access the information from one or more companion avatar files. Avatar metadata 304 may be combined with avatar data 302 and encoded by the encoder 306.

The metadata format may be used as an output of the decoder 310. The metadata 314 is extracted from the decoded data and associated with one or more companion files containing the actual avatar data 312. The encoded data 308 may be sent to a decoder 310 to be decoded into another format of avatar data 312 or directly rendered by a renderer 316 after decoding.

In a metaverse context, if an avatar streaming platform supports multiple avatar formats, this metadata format can be used on a server to detail the different avatar representation available for a given user for instance. This metadata information may be used upon request to indicate to a client what data each of the avatar representations contains. The client may then use the information to request the (proper) data.

An example method in accordance with some embodiments may include: obtaining encoded avatar data; decoding the encoded data to generate decoded avatar data; splitting the decoded avatar data into avatar content data and avatar metadata; determining a first format of the avatar content data using the avatar metadata; converting the avatar content data from the first format to a second format; and rendering the converted avatar content data.

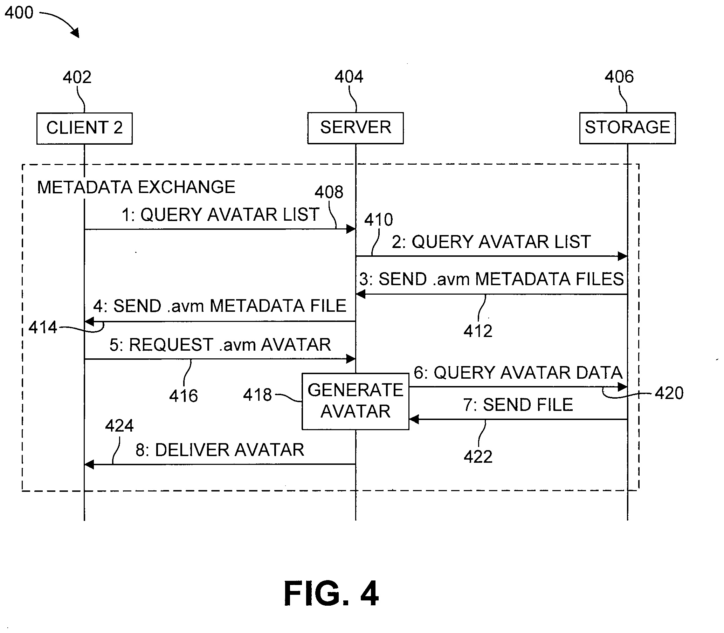

FIG. 4 is a message sequencing diagram illustrating example client-server interactions for requesting avatar data using the .avm file format according to some embodiments. FIG. 4 illustrates a scenario of server and client interaction using the .avm file format. In this example, the data is stored on a separate storage, but the server and storage may be the same entity.

The client 402 queries 408 the server 404 for a list of available avatar formats. The server 404 queries 410 the storage manager for an available avatar list. The storage manager 406 sends 412 a list of .avm files describing the avatar representation in storage. The server 404 sends 414 the .avm metadata file (information) to the client 402. The information may be displayed and handled on the client application side. The client 402 choses the desired avatar format and requests 416 the chosen avatar representation. The server 404 queries 420 the storage manager to get information about the avatar. For some embodiments, the information may all be necessary information.

The storage manager 406 sends 422 the file to the server 404. If the client requested specific data that may be a subset or a combination of the data stored in the server (for instance, a single LoD), the server 404 may generate 418 a new file with information about the requested avatar file e.g., mesh, skeletal, accessories, appearance, metadata information, and structure. For some embodiments, the generated avatar file may include all necessary information about the avatar. For some embodiments, the server 404 may generate a new avatar if the client 402 requested a subset of the data stored in a single file or if the client 402 requested data in two or more files. In such a scenario, the server 404 may combine the data stored in different files. The server 404 delivers 424 the generated avatar to the client 402 for a given application.

For some embodiments, the server and storage may be the same entity, in which case, the message exchanges between the server and storage are not needed. In such a scenario, the server knows what the server has to offer and the server responds to client requests without having to send messages to a separate storage entity. For some embodiments, the step of generate avatar 418 may not occur. The server may already have the avatar in the corresponding file format for the client, and server may skip the step of generating the avatar.

As detailed in Table 2, the avatar metadata format first contains high-level / profile information on the avatar, including a name, a description, an identifier (id), an age, and a gender. Additional high-level information may be further added to the format. The format shows the list of associated avatar representations.

**Table 2.**

| **Name** | **Type** | **Default** | **Required** | **Description** |
|---|---|---|---|---|
| version | string | N/A | Yes | File version |
| name | string | N/A | Yes | Name of the avatar |
| description | string | N/A | Yes | Description of the avatar |
| id | integer | N/A | Yes | Identification of the avatar |
| age | integer | N/A | No | Age of the avatar |
| gender | string | N/A | No | Gender of the avatar |
| representations | array<AvatarRepresentation> | N/A | Yes | List of representations of an avatar. Each representation references an external avatar source with a specific set of features. |

Table 3 details the semantic of an avatar representation, in which one set of data for the fields in Table 3 relate to the same avatar. Each representation defines an identifier (id) and a level of detail (Jod). Each representation provides the Uniform Resource Identifier or URI (*uri*) to the associated avatar data. Some embodiments may indicate the format of the source. Also, each representation lists the avatar data (which may be all the avatar data for some embodiments) contained in the source through a Content Descriptor (*content*)*.* Multiple representations may reference the same source. The level of detail of an avatar representation is not necessarily the same as the one used in the source. Avatar representations with the same level of detail may be defined using multiple sources.

**Table 3.**

| **Name** | **Type** | **Default** | **Required** | **Description** |
|---|---|---|---|---|
| id | integer | N/A | Yes | Identification of the avatar representation |
| lod | integer | N/A | Yes | Level of detail of the avatar representation |
| uri | string | N/A | Yes | URI to an avatar file source |
| format | string | N/A | No | The file format of the source. This indicates what type of source file is referenced. Possible values include: "PLY", "OBJ", "FBX", "USD", "GLTF", "DNA", "OTHER". |
| content | ContentDescriptor | N/A | Yes | Description of the avatar data contained in the representation |

Table 4 details the semantic of a content descriptor (*ContentDescriptor*)*.* The content descriptor may define the path to the avatar data in the source file (if the avatar data is not stored at the root of the file). The content descriptor also may indicate the level of detail of the avatar to use in the source file, such as if the avatar data in the source file contains multiple levels of detail. The content descriptor lists all the properties that are contained in the source file. For some embodiments, the data in Table 4 relates to mesh data of an avatar.

For some embodiments, the level of detail (*Iod*).field may be used by multiple representations. For example, the same level of detail may be used for two different avatar geometries with different topologies. The level of detail in the content descriptor indicates which mesh is referenced in the associated file. For instance, an FBX file may define a mesh with multiple levels of detail. The level of detail in the avatar representation and the content descriptor may be different.

**Table 4.**

| **Name** | **Type** | **Default** | **Required** | **Description** |
|---|---|---|---|---|
| path | string | N/A | No | Path of the avatar data in the source file. |
| lod | integer | N/A | No | Level of detail (LOD) of the associated mesh in the source file. This property indicates which LOD of a given mesh in the source file is used for the avatar representations. |
| vertices | boolean | False | No | Indicates if the vertices of the avatar are provided in the source. |
| faces | boolean | False | No | Indicates if the faces/polygons of the avatar are provided in the source. |
| normals | boolean | False | No | Indicates if the normals of the avatar are provided in the source. |
| blendshapes | boolean | False | No | Indicates if the blendshapes of the avatar are provided in the source. |
| controllers | boolean | False | No | Indicates if the controllers of the avatar are provided in the source. |
| uvs | boolean | False | No | Indicates if uv coordinates of the avatar are provided in the source. |
| materials | boolean | False | No | Indicates if the materials of the avatar are provided in the source. |
| joints | boolean | False | No | Indicates if the joints of the avatar are provided in the source. |
| skinningWeights | boolean | False | No | Indicates if the skinning weights of the avatar are provided in the source. |
| animation | boolean | False | No | Indicates if animation data of the avatar is provided in the source. |

Table 5 shows an example code listing for a JSON file format. Table 5 shows an example implementation of the avatar metadata format based on the JSON file format. Other implementations detailing the same content may be defined using other file formats, such as XML or a dedicated binary format for instance.

**Table 5.**

| |
|---|
| ```
{
   "$schema":"http://j son-schema.org/draft-04/schema",
   "title":"Object Avatar Format",
   "type":"object",
   "description":"Metadata description of an avatar.",
   "properties":{
      "name":{
         "type":"string",
         "description":"Name of the avatar."
      },
      "description":{
         "type":"string",
         "description":"Description of the avatar."
      ),
      "id":{
         "type":"integer",
         "description":"Id of the Avatar."
      },
      "age":{
         "type":"integer",
         "description":"Age of the avatar."
      },
      "gender":{
         "type":"string",
         "description":"Gender of the avatar."
       ),
      "representations":{
         "type":"array",
         "description":"List of avatar lod representation.",
         "items":{
            "type":"object",
            "properties":{
               "id":{
                  "type":"integer",
                  "description":"Id of the avatar representation."
                },
               "lod":{
                  "type":"integer",
                  "description":"Level of details of the avatar representation."
                },
               "uri":{
                  "type":"string",
                   "description":"URI to an avatar file source."
                },
                "format":{
                   "type":"string",
                   "description":"Description of the avatar.",
                   "enum":[
                   "OBJ",
``` |
| ```
                     "PLY",
                     "USD",
                     "FBX",
                     "GLTF",
                     "OTHER"
                  ]
               "content":{
                  "type":"object",
                  "properties":{
                     "path":{
                        "type":"string"
                     },
                     "lod":{
                        "type":"integer"
                     },
                     "vertices":{
                        "type":"boolean"
                     ),
                     "faces":{
                        "type":"boolean",
                        "default":false
                     ),
                     "normals":{
                        "type":"boolean",
                        "default":false
                     ),
                     "blendshapes" : {
                        "type":"boolean",
                        "default":false
                     },
                     "controllers":{
                        "type":"boolean",
                        "default":false
                     ),
                     "uvs":{
                        "type":"boolean",
                        "default":false
                     ),
                     "materials":{
                        "type":"boolean",
                        "default":false
                     },
                     "joints":{
                        "type":"boolean",
                        "default":false
                     ),
                     "skinningWeights":{
                        "type":"boolean",
                        "default":false
                     ),
                     "animation":{
                        "type":"boolean",
                        "default":false
                     )
                  },
                  "required":[
``` |
| ```
                     "vertices"
                  ]
               }
            },
            "required":[
               "id",
               "lod",
               "uri",
               "content"
            ]
         },
         "minItems":1
      }
   },
   "required":[
      "name",
      "description",
      "id",
      "representations"
   ]
   }
``` |

### Use Case

A use case may include a system in which a content creator generates multiple representations of an avatar using different tools and different formats to be stored on a server and used by different applications.

In this example, an artist creates an avatar with two different levels of detail and exports the data in two formats: OBJ and FBX. The same metadata information for these two representations is the same and may be defined using the .avm avatar metadata file format along with the associated geometry. See Table 5 for an example code listing//data structure. An application that uses this avatar may fetch the corresponding avatar data based on the information provided by the server through an .avm file. Table 6 shows the content of such an .avm file. Two OBJ files are referenced to provide the geometry for two different levels of detail. The same data is also provided in a single FBX file containing the two LODs.

### Example File

Table 6 shows an example avatar metadata file (.avm) that references multiple representations. Table 6 may be used with a scenario in which two clients are requesting two respective formats.

**Table 6.**

| |
|---|
| ```
 {
   "version":"1.0",
   "name":"Morgan",
   "description":"Morgan",
   "id":0,
``` |
| ```
   "representations":[
      {
         "id":0,
         "lod":0,
         "uri":"Morgan0.obj",
         "format":"OBJ",
         "content" : {
            "vertices":true,
            "faces":true
         }
      ),
      ("id":1,
         "lod":1,
         "uri":"Morganl.obj",
         "format":"OBJ",
         "content":{
            "vertices":true,
            "faces":true
         }
      ),
      {
         "id":2,
         "lod":0,
         "uri":"Morgan.fbx",
         "format":"FBX",
         "content":{
            "vertices":true,
            "faces":true
         )
      },
      {
         "id":3,
         "lod":1,
         "uri":"Morgan.fbx",
         "format":"FBX",
         "content":{
            "vertices":true,
            "faces":true
         1
      }
   ]
 }
``` |

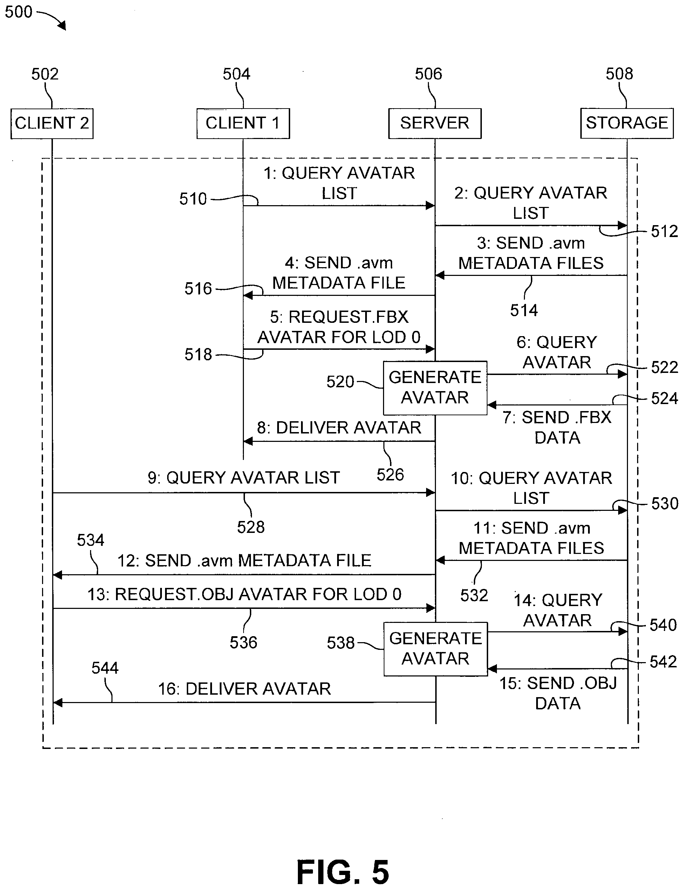

FIG. 5 is a message sequencing diagram illustrating example client-server interactions for delivery of avatar data with two representations at two distinct clients according to some embodiments. FIG. 5 illustrates a scenario of server and client interaction using the proposed .avm file format. The server stores the different representations of the avatar along with the associated .avm file detailed in Table 6. For some embodiments, the server and the storage manager may be the same device or entity, so some messages may not be needed.

A client 504 queries 510 the server 506 for a list of available avatar formats. The server 506 queries 512 a storage manager 508 for the available avatar list. The storage manager 508 sends 514 a list of metadata (.avm) files describing the avatar representation in storage. The server 506 sends 516 the metadata (.avm) file (information) to the client 504. The information may be displayed and handled on the client application side. Based on the information available on the .avm file, the client 504 requests 518 the level of detail 0 (LOD 0) of the FBX avatar representation from the server 506.

The server 506 queries 522 the storage manager 508. The storage manager 508 sends 524 the requested avatar representation to the server 506. The sever 506 delivers 526 the data to the client 504. A second client 502 queries 528 the server 506 for the list of available avatar formats. The server 506 queries 530 the storage manager 508 for the available avatar list. The storage manager 508 sends 532 to the server 506 a list of .avm files describing the avatar representation in storage.

The server 506 sends 534 the metadata (.avm) file (information) to the second client 502. The information may be displayed and handled on the client application side. Based on the information available on the .avm file, the second client 502 requests 536 the level of detail 0 (LOD 0) of the OBJ avatar representation from the server 506. The server 506 queries 540 the storage manager 508. The storage manager 508 sends 542 the requested avatar representation to the server 506. The server 506 delivers 544 the data to the second client 502.

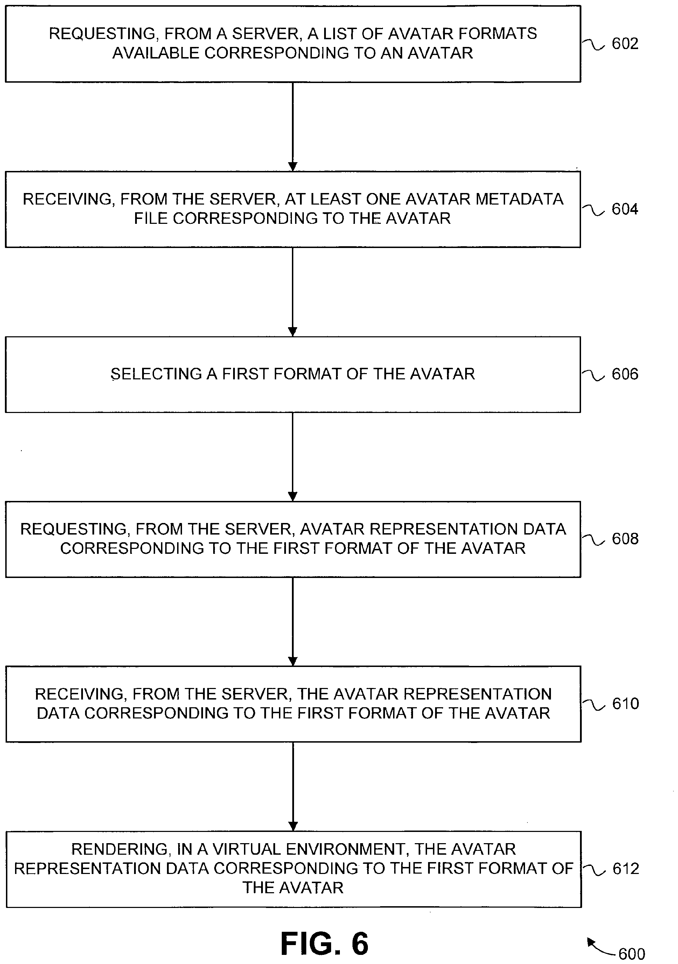

FIG. 6 is a flowchart illustrating an example process for requesting avatar data according to some embodiments. For some embodiments, an example process 600 may include requesting 602, from a server, a list of avatar formats available corresponding to an avatar. For some embodiments, the example process 600 may further include receiving 604, from the server, at least one avatar metadata file corresponding to the avatar. For some embodiments, the example process 600 may further include selecting 606 a first format of the avatar. For some embodiments, the example process 600 may further include requesting 608, from the server, avatar representation data corresponding to the first format of the avatar. For some embodiments, the example process 600 may further include receiving 610, from the server, the avatar representation data corresponding to the first format of the avatar. For some embodiments, the example process 600 may further include rendering 612, in a virtual environment, the avatar representation data corresponding to the first format of the avatar.

An example apparatus in accordance with some embodiments may include at least one processor configured to perform any one of the methods described within this application. An example apparatus in accordance with some embodiments may include a non-transitory computer-readable medium storing instructions for causing one or more processors to perform any one of the methods described within this application. An example apparatus in accordance with some embodiments may include at least one processor and at least one memory (e.g., a non-transitory computer-readable medium) storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: requesting, from a server, a list of avatar formats available corresponding to an avatar; receiving, from the server, at least one avatar metadata file corresponding to the avatar; selecting a first format of the avatar; requesting, from the server, avatar representation data corresponding to the first format of the avatar; receiving, from the server, the avatar representation data corresponding to the first format of the avatar; and rendering, in a virtual environment, the avatar representation data corresponding to the first format of the avatar.

For some embodiments of the example method, the first format is one of the group of formats consisting of PLY, OBJ, FBX, USD, GLTF, and DNA.

For some embodiments of the example method, at least one of the at least one avatar metadata file is in avatar metadata format (.avm).

Some embodiments of the example method may further include: selecting a second format of the avatar; requesting, from the server, avatar representation data corresponding to the second format of the avatar; receiving, from the server, the avatar representation data corresponding to the second format of the avatar; and rendering, in a virtual environment, the avatar representation data corresponding to the second format of the avatar.

For some embodiments of the example method, the avatar representation data was generated by the server.

For some embodiments of the example method, the avatar representation data originated from more than one data format.

For some embodiments of the example method, the avatar representation data includes geometry data corresponding to the avatar.

For some embodiments of the example method, the avatar representation data includes avatar profile data corresponding to the avatar.

For some embodiments of the example method, the avatar representation data includes path information indicating a location of avatar data.

For some embodiments of the example method, the avatar representation data includes mesh data corresponding to the avatar.

For some embodiments of the example method, the avatar representation data includes two or more levels of detail of geometry data corresponding to the avatar.

Some embodiments of the example method may further include: requesting, from the server, avatar representation data corresponding to a new level of detail of the avatar; receiving, from the server, the avatar representation data corresponding to the new level of detail of the avatar; and rendering, in a virtual environment, the avatar representation data corresponding to the new level of detail of the avatar.

For some embodiments of the example method, selecting the first format of the avatar is based on at least one of the at least one avatar metadata file corresponding to the avatar.

For some embodiments of the example method, the avatar representation data supports a JSON file format.

An example apparatus in accordance with some embodiments may include: a processor; and a memory storing instructions operative, when executed by the processor, to cause the apparatus to perform the method of any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

it is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
requesting, from a server, a list of avatar formats available corresponding to an avatar;
receiving, from the server, at least one avatar metadata file corresponding to the avatar;
selecting a first format of the avatar;
requesting, from the server, avatar representation data corresponding to the first format of the avatar;
receiving, from the server, the avatar representation data corresponding to the first format of the avatar; and
rendering, in a virtual environment, the avatar representation data corresponding to the first format of the avatar.

2. The method of claim 1, wherein the first format is one of the group of formats consisting of PLY, OBJ, FBX, USD, GLTF, and DNA.

3. The method of any one of claims 1-2, wherein at least one of the at least one avatar metadata file is in avatar metadata format (.avm).

4. The method of any one of claims 1-3, further comprising:
selecting a second format of the avatar;
requesting, from the server, avatar representation data corresponding to the second format of the avatar;
receiving, from the server, the avatar representation data corresponding to the second format of the avatar; and
rendering, in a virtual environment, the avatar representation data corresponding to the second format of the avatar.

5. The method of any one of claims 1-4, wherein the avatar representation data was generated by the server.

6. The method of any one of claims 1-5, wherein the avatar representation data originated from more than one data format.

7. The method of any one of claims 1-6, wherein the avatar representation data comprises geometry data corresponding to the avatar.

8. The method of any one of claims 1-7, wherein the avatar representation data comprises avatar profile data corresponding to the avatar.

9. The method of any one of claims 1-8, wherein the avatar representation data comprises path information indicating a location of avatar data.

10. The method of any one of claims 1-9, wherein the avatar representation data comprises mesh data corresponding to the avatar.

11. The method of any one of claims 1-10, wherein the avatar representation data comprises two or more levels of detail of geometry data corresponding to the avatar.

12. The method of any one of claims 1-11, further comprising:
requesting, from the server, avatar representation data corresponding to a new level of detail of the avatar;
receiving, from the server, the avatar representation data corresponding to the new level of detail of the avatar; and
rendering, in a virtual environment, the avatar representation data corresponding to the new level of detail of the avatar.

13. The method of any one of claims 1-12, wherein selecting the first format of the avatar is based on at least one of the at least one avatar metadata file corresponding to the avatar.

14. The method of any one of claims 1-13, wherein the avatar representation data supports a JSON file format.

15. An apparatus comprising:
a processor; and
a memory storing instructions operative, when executed by the processor, to cause the apparatus to perform the method of any one of claims 1 through 14.
